# EUROPÄISCHE PATENTANMELDUNG

(11) **EP 4 378 731 A1**
(43) Veröffentlichungstag der Anmeldung: **05.06.2024**
(21) Anmeldenummer: 23213703.4
(22) Anmeldetag: 01.12.2023
(51) Int. Cl.: B60K 7/00, B60L 7/26, B60T 13/74, B66F 9/075, B60K 17/04, F16D 59/02, F16D 121/22

(54) **ANTRIEBSACHSEN-ANORDNUNG FÜR EIN FLURFÖRDERZEUG**

(30) Priorität: 02.12.2022 DE 102022132055
(71) Anmelder: Jungheinrich Aktiengesellschaft, 22047 Hamburg (DE)
(72) Erfinder: Mertke, Sergej, 84036 Landshut (DE); Schwingshandl, Frank, 85368 Moosburg (DE)
(74) Vertreter: Weickmann & Weickmann PartmbB

(57) **Zusammenfassung**

Die vorliegende Erfindung betrifft eine Antriebsachsen-Anordnung (10) für ein Flurförderzeug, umfassend zwei separate koaxiale Einzelradantriebe (12a, 12b), welche dazu eingerichtet sind, ein jeweiliges rechtes und linkes Rad des Flurförderzeugs mittels eines Antriebsmotors (16a, 16b) anzutreiben, wenigstens eine Elektromagnet-Bremseinheit (18a, 18b) pro Einzel-radantrieb (12a, 12b), welche dazu eingerichtet ist, während eines Bremsbetriebs eine steuerbare Bremskraft auf das jeweilige Rad des Flurförderzeugs auszuüben; und eine Steuervorrichtung (20), welche mit den Elektromagnet-Bremseinheiten (18a, 18b) betriebsmäßig gekoppelt und dazu eingerichtet ist, den Bremsbetrieb der Elektromagnet-Bremseinheiten (18a, 18b) zu steuern. Weiterhin betrifft die Erfindung ein Flurförderzeug, umfassend eine derartige Antriebsachsen-Anordnung.

## Beschreibung

Die vorliegende Erfindung betrifft eine Antriebsachsen-Anordnung für ein Flurförderzeug sowie ein Flurförderzeug, umfassend eine derartige Antriebsachsen-Anordnung.

Aktuell auf dem Markt befindliche Flurförderzeuge mit elektrischen Einzelradantrieben sind hinsichtlich ihrer Bremssysteme in der Regel derart aufgebaut, dass sie ein generatorisches Betriebsbremssystem umfassen, welches derart wirkt, dass bei Bremsvorgängen Bewegungsenergie des entsprechenden Flurförderzeugs mittels eines Generators in elektrische Energie umgewandelt wird, welche einem Energiespeicher, insbesondere einer Traktionsbatterie, zur Speicherung und späteren Verwendung während des Betriebs des Flurförderzeugs zugeführt wird. Derartige generatorische Betriebsbremssysteme können jedoch in der Regel nicht alle Betriebszustände der entsprechenden Fahrzeuge ausreichend abdecken, da sie beispielsweise bei langen Rampenfahrten, hohen Fahrgeschwindigkeiten oder bestimmten Zuständen der Traktionsbatterie keine ausreichende Bremswirkung erzeugen können, beispielsweise wenn diese voll ist oder eine Temperatur außerhalb eines optimalen Arbeitsbereichs aufweist. Demensprechend ist aus Sicherheitsgründen ein zusätzliches mechanisches Bremssystem vonnöten, das in verschiedenen Varianten ausgeführt sein kann.

Beispielsweise sind hierzu trocken- oder nasslaufende Lamellenbremsen zum Einsatz gekommen, welche im Bereich der entsprechenden Motoren oder in den Endabtrieben der Einzelradantriebe angeordnet sein können. Hierbei kann je nach Bauweise eine einzelne Bremse für ein Paar von Rädern vorgesehen sein oder jedes Rad kann mit einer eigenen Bremse ausgerüstet sein. Solche Bremsen werden in der Regel durch einen Fahrer des Flurförderzeugs dosierbar mechanisch über ein entsprechendes Pedal sowie Hebel und/oder Seilzüge betätigt. Alternativ kann in ähnlichen Varianten eine hydraulische Aktivierung mittels eines Pedals sowie eines jeweiligen Geber- und Nehmerzylinders vorgesehen sein.

Eine weitere Alternative zu einem dosierbaren mechanischen Bremssystem stellen Ausführungsformen mit elektromagnetischen "On/Off"-Bremsen dar. Solche Typen von Bremsen sind jedoch nicht dosierbar, sondern weisen lediglich einen einzelnen offenen sowie einen einzelnen geschlossenen Zustand mit einer maximalen Bremswirkung auf. Demensprechend können solche Systeme nur in geringem Maße die zuvor beschriebenen Einschränkungen durch bestimmte Betriebszustände entsprechender Flurförderzeuge ausgleichen. Die Vorteile derartiger Systeme liegen jedoch andererseits in ihren geringen Kosten sowie in ihrer einfachen Nutzung als zusätzliche Notstopp- oder Parkbremse, sie führen jedoch hierbei zu einer eingeschränkten Fahrzeugverfügbarkeit.

In ähnlicher Weise ist aus dem Stand der Technik bekannt, beispielsweise aus der DE 10 2013 203 401 A1, in Achsgehäusen von Antriebsachsen elektrisch dosierbare Elektromagnet-Bremseinheiten zu verbauen. Diese haben jedoch den Nachteil, dass sie durch ihre Anordnung innerhalb des Achsgehäuses schlecht zugänglich sind und daher nur sehr schwer gewartet oder getauscht werden können. Aus denselben Gründen ist die Montage derartiger Bremssysteme in entsprechenden Achsgehäusen oft aufwendig, sodass hier hinsichtlich des Einsatzes entsprechender Bremssysteme noch Verbesserungspotential besteht.

Es ist demensprechend die Aufgabe der vorliegenden Erfindung, eine Antriebsachsen-Anordnung für ein Flurförderzeug bereitzustellen, welche die oben genannten Nachteile des Stands der Technik ausräumt und ein flexibles und wirkungsvolles System zum Bremsen von Rädern eines Flurförderzeugs des oben beschriebenen Typs umfasst.

Zur Lösung der genannten Aufgabe wird erfindungsgemäß eine Antriebsachsen-Anordnung für ein Flurförderzeug vorgeschlagen, umfassend zwei separate koaxiale Einzelradantriebe, welche dazu eingerichtet sind, ein jeweiliges rechtes und linkes Rad des Flurförderzeugs mittels eines Antriebsmotors anzutreiben, wenigstens eine Elektromagnet-Bremseinheit pro Einzelradantrieb, welche dazu eingerichtet ist, während eines Bremsbetriebs eine steuerbare Bremskraft auf das jeweilige Rad des Flurförderzeugs auszuüben, und eine Steuervorrichtung, welche mit den Elektromagnet-Bremseinheiten betriebsmäßig gekoppelt und dazu eingerichtet ist, den Bremsbetrieb der Elektromagnet-Bremseinheiten zu steuern.

Hierbei ist der Begriff der "separaten Einzelradantriebe" derart zu verstehen, dass ein baulicher Abstand dazwischen bezogen auf eine Breitenrichtung des Flurförderzeugs vorliegt. Gleichzeitig vereint die vorliegende Erfindung den einfachen Aufbau einer elektromagnetischen "On/Off"-Bremse mit der Dosierbarkeit einer aufwendigeren mechanischen oder hydraulisch geregelten Bremse. Dies führt neben Kostenvorteilen auch zu Vorteilen in der Bedienung, da durch das Vorsehen der Steuervorrichtung ein einfacheres Pedalkonzept in dem entsprechenden Flurförderzeug realisiert werden kann. Weiterhin können in Kombination mit den Einzelradantrieben die entsprechenden Elektromagnet-Bremseinheiten derart angeordnet werden, dass sie für eine Wartung oder einen Tausch leicht zugänglich sind und beispielsweise ferner ebenfalls leichter gekühlt werden können, als wenn sie innerhalb eines einzelnen Achsgehäuses aufgenommen wären. Auch das Vorsehen eines Antriebssystems aus Einzelradantrieben weist hinsichtlich seiner Herstellungskosten und seines Bauraums gegenüber einer Antriebsachse des eben beschriebenen Typs deutliche Vorteile auf.

Ferner ermöglichen derartige pro Einzelrad vorgesehen Elektromagnet-Bremseinheiten das Ausüben einer unterschiedlichen Bremskraft pro Rad des Flurförderzeugs, was in bestimmten Betriebssituationen von Flurförderzeugen ebenfalls zu einer erhöhten Betriebssicherheit führen kann, wobei die entsprechenden Steuerbefehle der Steuervorrichtung insbesondere auf Grundlage von erhaltenen Sensordaten, beispielsweise von Radgeschwindigkeit-Sensoren, ausgegeben werden können.

Wenngleich unterschiedliche Bauarten der Elektromagnet-Bremseinheiten in der erfindungsgemäßen Antriebsachsen-Anordnung denkbar sind, so können diese in bestimmten Ausführungsformen der vorliegenden Erfindung dazu eingerichtet sein, in einem unbestromten Zustand eine maximale Bremskraft auszuüben, insbesondere, indem die Elektromagnet-Bremseinheiten mittels elastischer Elemente in einen Zustand maximaler Bremskraft vorbelastet sind. Hierbei können als die elastischen Elemente beispielsweise Schraubenfendern zum Einsatz kommen, welche eine relativ hohe Vorbelastkraft in Richtung des Zustands mit maximaler Bremskraft ausüben können. Lediglich wenn in einem Betrieb des Flurförderzeugs ein entsprechender elektrischer Strom in den Elektromagnet-Bremseinheiten dieser Bauart fließt, werden diese geöffnet und können durch eine Regelung dieses Betriebsstroms hinsichtlich ihrer ausgeübten Bremskraft steuerbar sein. Dementsprechend können derartige in unbestromtem Zustand geschlossene Bremseinheiten in einfacher Weise ebenfalls als Park- oder Feststellbremsen wirken.

Um zu einer vereinfachten Zugänglichkeit der Elektromagnet-Bremseinheiten beizutragen und beispielsweise eine Wartung oder ein Ersetzen davon zu vereinfachen, kann jeweils eine einzelne Elektromagnet-Bremseinheit pro Einzelradantrieb vorgesehen sein, welche an einem dem jeweiligen Rad abgewandten Ende davon angeordnet ist, insbesondere benachbart zu dem entsprechenden Antriebsmotor. Auf diese Weise liegen sich in der Antriebsachsen-Anordnung gemäß einer solchen Ausführungsform die beiden Elektromagnet-Bremseinheiten der jeweiligen Einzelradantriebe bezüglich einer zentralen Längsachse des Fahrzeugs gegenüber, indem jedoch ein Abstand zwischen den beiden Bremseinheiten bezogen auf die Breitenachse des Fahrzeugs vorgesehen ist, kann an dieser Stelle leicht auf sie zugegriffen werden.

Ferner kann in der oben bereits kurz angerissenen Weise die erfindungsgemäße Antriebsachsen-Anordnung zusätzlich wenigstens ein generatorisches Betriebsbremssystem umfassen, vorzugsweise ein solches pro Einzelradantrieb. In derartigen Weiterbildungen der vorliegenden Erfindung kann dementsprechend die Steuervorrichtung ferner dazu eingerichtet sein, bei einer Bremskraftanforderung unterhalb eines Bremskraft-Schwellenwerts lediglich das generatorische Betriebsbremssystem zu betreiben und bei einer Bremskraft-Anforderung oberhalb des Bremskraft-Schwellenwerts sowohl das generatorische Betriebsbremssystem als auch die Elektromagnet-Bremseinheiten zu betreiben. Auf diese Weise wird zunächst einmal während eines durch einen Fahrer des Flurförderzeugs ausgelösten Bremsvorgangs so lange lediglich generatorisch gebremst, wie der Bremskraft-Schwellenwert noch nicht erreicht worden ist, um eine maximale Rückgewinnung elektrischer Energie und eine optimale Betriebseffizienz des Flurförderzeugs zu erzielen. Lediglich in Fällen, in welchen die angeforderte Bremswirkung nicht alleine durch das generatorische Betriebsbremssystem bewerkstelligt werden kann, werden dementsprechend von der Steuervorrichtung zusätzlich die Elektromagnet-Bremseinheiten betrieben, um eine ausreichend große Bremskraft sicherstellen zu können.

Hierbei kann die Steuervorrichtung ferner zusätzlich dazu eingerichtet sein, den Bremskraft-Schwellenwert abhängig von wenigstens einem Betriebsparameter der Antriebsachsen-Anordnung und/oder des Flurförderzeugs anzupassen. Derartige Betriebsparameter können beispielsweise eine Temperatur oder ein Ladezustand der Traktionsbatterie des Flurförderzeugs sein oder es kann beispielsweise auch eine Regelungsschleife in dem Flurförderzeug vorgesehen sein, mittels welcher die aktuell erzielte Bremskraft erfasst wird, beispielsweise über Beschleunigungssensoren, und falls die lediglich mittels des generatorischen Betriebsbremssystems erzielte Bremskraft nicht der von dem Fahrer angewiesenen Bremskraft entspricht, können durch die Steuervorrichtung zusätzlich die Elektromagnet-Bremseinheiten zu einem Bremsbetrieb angesteuert werden. Hierbei versteht sich, dass die Steuereinheit jeweils betriebsmäßig mit entsprechenden Sensoreinheiten gekoppelt und zu einer geeigneten Verarbeitung der gelieferten Daten eingerichtet ist.

Insgesamt wird durch diese Steuerstrategie das Ziel verfolgt, ein konsistentes Bremsverhalten in dem Flurförderzeug zu erzielen, das heißt ungeachtet der momentanen Betriebszustände des Flurförderzeugs und/oder der Antriebsachsen-Anordnung bei einer entsprechenden Betätigung einer Bedieneinheit, wie beispielsweise eines Fahrpedals oder eines Bremspedals, stets eine gleichbleibende Bremskraft zu bewirken, um die Bedienung des Flurförderzeugs für den Fahrer intuitiv zu gestalten und die Betriebssicherheit davon zu erhöhen.

In jedem Fall können in Ausführungsformen der vorliegenden Erfindung die Steuervorrichtung und die Elektromagnet-Bremseinheiten derart eingerichtet sein, dass eine Regelung der durch die Elektromagnet-Bremseinheiten ausgeübte Bremskraft alternativ entweder in einer kontinuierlichen Weise oder in einer gestuften Weise mit mindestens drei Bremskraftstufen erfolgen kann.

Weiterhin kann die Steuervorrichtung dazu eingerichtet sein, einen Stromverbrauch der Elektromagnet-Bremseinheiten während ihres Betriebs zu überwachen und gegebenenfalls auf Grundlage dieser Überwachung eine Anpassung der Steuerung des Bremsbetriebs der Elektromagnet-Bremseinheiten vorzunehmen. Auf diese Weise kann ein möglicher Verschleiß von Komponenten der Elektromagnet-Bremseinheiten festgestellt und geeignet ausgeglichen werden, was ebenfalls zu einer konsistenten Bremswirkung über die Lebensdauer der Bremseinheiten beiträgt und in ähnlicher Weise wie oben beschrieben die Bedienung des Flurförderzeugs für einen Fahrer erleichtert und damit gleichzeitig die Sicherheit davon erhöht.

Konstruktiv können in der erfindungsgemäßen Antriebsachsen-Anordnung die Elektromagnet-Bremseinheiten jeweils eine Endscheibe, eine durch einen Elektromagneten verlagerbare und mittels eines elastischen Elements in Richtung der Endscheibe vorbelastete Ankerscheibe sowie einen zwischen der Endscheibe und der Ankerscheibe angeordneten Bremsrotor umfassen, wobei ferner zwischen der Endscheibe und der Ankerscheibe wenigstens ein Dämpfungselement angeordnet sein kann. Hierbei wird durch das Anpressen bzw. Einklemmen des mit dem entsprechenden Rad des Flurförderzeugs rotierenden Bremsrotors zwischen der jeweils drehfest angeordneten Endscheibe und Ankerscheibe eine Reibwirkung hervorgerufen, die letztlich zu der auf das entsprechende Rad auszuübenden Bremswirkung führt. Hierbei versteht sich, dass die miteinander zur Erzeugung der Bremswirkung in Kontakt kommenden Komponenten mit geeigneten Bremsbelägen oder ähnlichem ausgestattet sein können.

In derartigen Ausführungsformen der erfindungsgemäßen Antriebsachsen-Anordnung kann hierbei eine Mehrzahl von Dämpfungselementen umfänglich beabstandet radial außerhalb des Bremsrotors angeordnet sein oder alternativ ein einzelnes Dämpfungselement vorgesehen sein, welches sich radial außerhalb des Bremsrotors im Wesentlichen um den gesamten Umfang davon erstreckt. Dementsprechend kann in derartigen Ausführungsformen durch das wenigstens eine Dämpfungselement gleichzeitig der Bremsrotor vor der äußeren Umgebung geschützt werden bzw. der Abrieb entsprechender Bremsbeläge in der Vorrichtung gehalten werden, sodass er nicht in die äußere Umgebung abgegeben wird.

Das Vorsehen der angesprochenen Dämpfungselemente in Ausführungsformen der erfindungsgemäßen Antriebsachsen-Anordnung ist eine Reaktion darauf, dass sich gezeigt hat, dass in derartigen Anordnungen das Bremsverhalten im ersten Moment von Bremsvorgängen ruckartig und nicht feinfühlig erfolgt ist, wobei dies genau dem Moment entspricht, wenn die durch das elastische Element vorbelastete Ankerscheibe den Bremsrotor schlagartig berührt. Ein derartiges ruckartiges Einsetzen einer Bremswirkung wäre für einen Fahrer des entsprechenden Fahrzeugs deutlich wahrnehmbar und würde den Bedien- und Fahrkomfort davon deutlich verringern. Dementsprechend wird durch das Vorsehen des wenigstens einen Dämpfungselements das Bremsverhalten in dem ersten Moment des Bremsvorgangs dahingehend optimiert, dass kein sprunghaftes Einsetzen der Bremskraft mehr auftritt, indem die Ankerscheibe kurz vor ihrem Kontakt zum Bremsrotor durch das wenigstens eine Dämpfungselement derart abgebremst wird, dass sie nicht schlagartig, sondern sanft den Bremsrotor berührt, um damit den angesprochenen starken Sprung in der Bremswirkung zu reduzieren oder gänzlich zu vermeiden.

Nachdem der Kontakt zwischen der Ankerscheibe und dem Bremsrotor erfolgt ist, wird anschließend von dem wenigstens einen Dämpfungselement keine oder lediglich noch eine vergleichsweise geringe Kraft gegen die Ankerscheibe ausgeübt und wenn die Bremse wieder gelöst wird bzw. die Ankerscheibe durch die Wirkung des entsprechenden Elektromagnets zurückgezogen wird, kann sich das entsprechende wenigstens eine Dämpfungselement selbstständig in seine Ausgangsposition zurückbewegen.

Hierbei sind unterschiedliche Ausgestaltungen von Dämpfungselementen mit den genannten gewünschten Eigenschaften denkbar, beispielsweise kann das wenigstens eine Dämpfungselement ein Gehäuse mit einer darin gebildeten fluidgefüllten Fluidkammer sowie einen in der Fluidkammer bewegbar aufgenommenen Kolben umfassen, wobei insbesondere durch Durchbrechungen in dem Kolben mit geringem Strömungsquerschnitt bzw. geringe Abstände zwischen den Innenwänden der Fluidkammer und dem Kolben lediglich eine kleine Menge des Fluids pro Zeiteinheit um den Kolben herum oder durch den Kolben hindurch strömen kann. Diese Wirkung kann demensprechend verstärkt werden, wenn ein Fluid mit einer erhöhten Viskosität zum Einsatz kommt, wie beispielsweise ein zu diesem Einsatzzweck geeignetes Öl.

Um nach einer Vollendung eines Bremsvorgangs die Überführung des elastischen Elements in seine Ausgangsposition in der eben beschriebenen Ausführungsform zu erleichtern, kann der Kolben ferner mittels eines elastischen Elements, beispielsweise einer Schraubenfeder, in eine Endstellung vorbelastet sein, welche einer offenen Position der entsprechenden Elektromagnet-Bremseinheit in der oben beschriebenen Weise entspricht.

Alternativ ist jedoch beispielsweise auch eine Ausführungsform denkbar, in welcher das wenigstens eine Dämpfungselement durch ein Pufferelement aus einem elastischen Material gebildet ist, welches hinsichtlich seiner Elastizität und seiner weiteren Materialeigenschaften derart gewählt sein kann, dass es einerseits das gewünschte sanfte Einsetzen der Bremswirkung ermöglicht und andererseits ausreichend widerstandsfähig ist, um eine für diesen Zweck ausreichende Lebensdauer aufzuweisen. Solche Pufferelemente werden nach einer Beendigung entsprechender Bremsvorgänge aufgrund ihrer Elastizität von selbst wieder in ihren Ausgangszustand zurückkehren, ohne dass hierzu weitere Maßnahmen notwendig wären.

Wie bereits weiter oben angedeutet, betrifft die vorliegende Erfindung gemäß einem weiteren Aspekt ein Flurförderzeug, welches eine Antriebsachsen-Anordnung der eben beschriebenen Art umfasst. Hierbei kann das Flurförderzeug insbesondere ein Fahrpedal, ein Bremspedal und eine zentrale Steuereinheit umfassen, wobei die zentrale Steuereinheit mit der Steuervorrichtung der Antriebsachsen-Anordnung betriebsmäßig gekoppelt oder integriert und dazu eingerichtet sein kann, auf Grundlage einer Betätigung des Fahrpedals wenigstens einen Antriebsmotor des Flurförderzeugs sowie wenigstens ein generatorisches Betriebsbremssystem des Flurförderzeugs zu betreiben und auf Grundlage einer Betätigung des Bremspedals die Elektromagnet-Bremseinheit der Antriebsachsen-Anordnung zu betreiben.

Somit wird es in derartigen Ausgestaltungen eines erfindungsgemäßen Flurförderzeugs ermöglicht, in einer überwiegenden Mehrzahl von normalen Betriebssituationen des Flurförderzeugs lediglich durch eine entsprechende Betätigung des Fahrpedals ein Beschleunigen des Fahrzeugs durch die Antriebsmotoren und ein Abbremsen mittels des generatorischen Betriebsbremssystems anzuweisen, während lediglich in Situationen, in welchen ein schärferes Bremsen vonnöten ist, mittels des Bremspedals zusätzlich die Elektromagnet-Bremseinheiten der Antriebsachsen-Anordnung für einen Bremsbetrieb angewiesen werden können.

Weitere Merkmale und Vorteile der vorliegenden Erfindung werden aus der nachfolgenden Beschreibung einer Ausführungsform davon noch deutlicher, wenn dieser zusammen mit den beiliegenden Figuren betrachtet wird. Diese zeigen im Einzelnen:
- Figur 1: eine Draufsicht einer erfindungsgemäßen Antriebsachsen-Anordnung, wobei die beiden Elektromagnet-Bremseinheiten in einer Querschnittsansicht dargestellt sind;
- Figur 2a: eine vergrößerte Ansicht einer der Bremseinheiten aus der Ausführungsform einer Antriebsachsen-Anordnung aus Figur 1; und
- Figur 2b: eine alternative Ausführungsform einer Bremseinheit, welche ebenfalls in der Anordnung aus Figur 1 eingesetzt werden könnte.

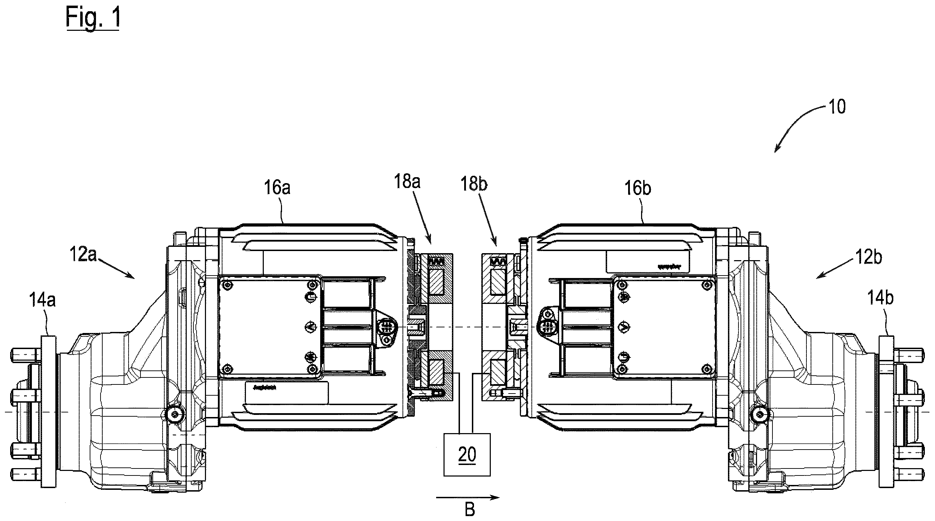

In Figur 1 ist zunächst eine erfindungsgemäße Antriebsachsen-Anordnung in einer Draufsicht gezeigt und ganz allgemein mit dem Bezugszeichen 10 bezeichnet. Die Antriebsachsen-Anordnung umfasst hierbei zwei separate koaxiale Einzelradantriebe 12a und 12b, welche identisch aufgebaut und symmetrisch bezüglich einer zentralen Längsachse des hier nicht weiter dargestellten Flurförderzeugs eingebaut sind, in welchem die Antriebsachsen-Anordnung 10 installiert ist. Ebenfalls nicht in Figur 1 dargestellt sind linke und rechte Räder des Flurförderzeugs, welche mittels der Einzelradantriebe 12a und 12b antreibbar sind und an entsprechenden Montageabschnitten 14a und 14b der beiden Einzelradantriebe 12a und 12b montierbar sind.

Zum Antreiben der beiden Räder sind jeweilige Antriebsmotoren 16a und 16b vorgesehen, welche als Elektromotoren ausgeführt sind und in gewohnter Weise dazu betreibbar sind, die entsprechenden Räder in Rotation zu versetzen. Hierzu können innerhalb der entsprechenden Einzelradantriebe 12a und 12b weitere Komponenten vorgesehen sein, wie beispielsweise ein jeweiliges Getriebe oder andere Kraftübertragungsmittel, diese sind jedoch an sich bereits aus dem Stand der Technik bekannt und auf eine weitere Beschreibung davon soll an dieser Stelle verzichtet sein. Weiterhin kann in ähnlicher Weise jedem der Einzelradantriebe ein generatorisches Betriebsbremssystem zugeordnet sein, welches beispielsweise auf einer Umpolung des entsprechenden Antriebsmotors 16a bzw. 16b basieren kann.

Zudem umfasst die in Figur 1 dargestellte Ausführungsform einer erfindungsgemäßen Antriebsachsen-Anordnung 10 an einem jeweiligen bezogen auf die Breitenrichtung B des Flurförderzeugs zentralen Ende des entsprechenden Einzelradantriebs 12a bzw. 12b Elektromagnet-Bremseinheiten 18a und 18b, welche von einer gemeinsamen Steuervorrichtung 20 angesteuert werden. Diese Steuervorrichtung 20 ist in Fig. 1 lediglich schematisch dargestellt und kann beispielsweise mit einer zentralen Steuereinheit des Flurförderzeugs betriebsmäßig gekoppelt oder integriert sein. Ferner kann die Steuervorrichtung 20 mit unterschiedlichen hier nicht gezeigten Sensoreinheiten gekoppelt sein, welche Daten über Betriebszustände der Antriebsachsen-Anordnung 10 oder anderer Komponenten des Flurförderzeugs liefern können, welche von der Steuervorrichtung 20 für einen gesteuerten Betrieb der Bremseinheiten 18a und 18b weiterverarbeitet werden können.

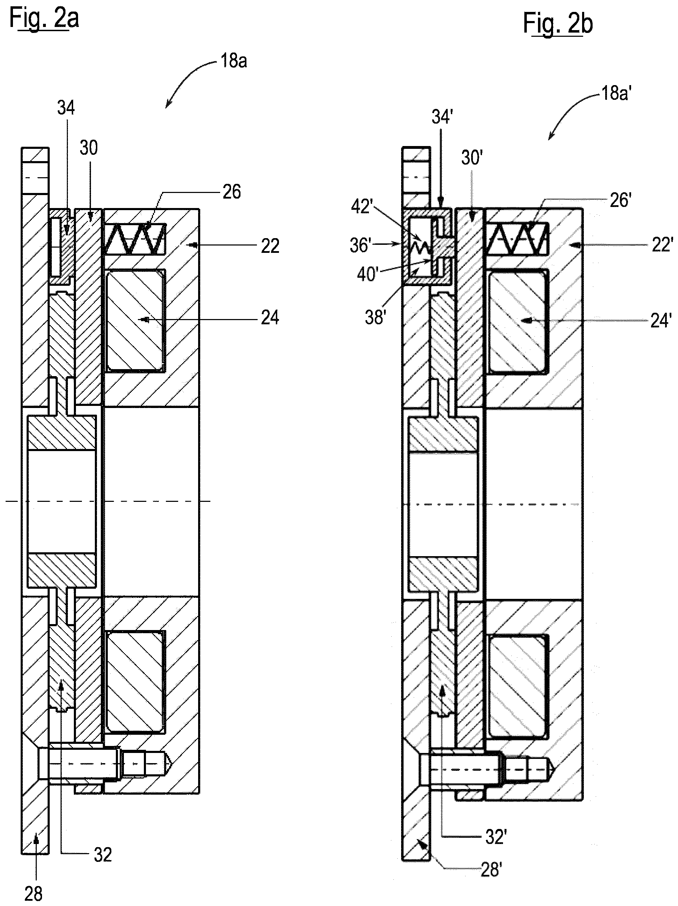

Hinsichtlich des konstruktiven Aufbaus der Bremseinheiten 18a und 18b sei insbesondere auf die vergrößerte Darstellung der linken Elektromagnet-Bremseinheit 18a aus Figur 2a verwiesen, anhand welcher im Folgenden die Funktionsweise davon erläutert sein soll, welche jedoch in gleicher Weise für die rechte Bremseinheit 18b anwendbar ist.

Hierbei umfasst die Bremseinheit 18a ein Bremsgehäuse 22, innerhalb welchem eine umlaufende Magnetspule 24 sowie eine als elastisches Element wirkende Feder 26 aufgenommen ist. Das Bremsgehäuse 22 ist hierbei fest mit einer an dem Antriebsmotor 16a angebrachten Endscheibe 28 verbunden, sodass sowohl das Bremsgehäuse 22 als auch die Endscheibe 28 rotationsfest bezüglich des entsprechenden Antriebsmotors 16a befestigt sind. Indem nun die in dem Bremsgehäuse 22 aufgenommene Feder 26 in einem unbestromten Zustand der Magnetspule 24 auf eine Ankerscheibe 30 wirkt, wird diese in Figur 2a in Richtung nach links vorbelastet und übt eine maximale Bremskraft auf einen zwischen der Endscheibe 28 und der Ankerscheibe 30 rotierenden Bremsrotor 32 auf, welcher zusammen mit dem entsprechenden Rad des Flurförderzeugs rotiert.

Demensprechend übt die hier gezeigte Elektromagnet-Bremseinheit 18a in dem genannten unbestromten Zustand eine maximale Bremskraft aus und für einen Fahrbetrieb des Flurförderzeugs ist es zunächst einmal notwendig, einen Strom durch die Magnetspule 24 fließen zu lassen, welcher durch seine magnetische Wirkung die Ankerscheibe 30 gegen die Wirkung der Feder 26 von dem Bremsrotor 32 entfernt, das heißt in Figur 2a nach rechts rückt, sodass der Bremsrotor 32 frei rotieren kann. Indem nun durch die Steuereinheit 20 aus Figur 1 der durch die Magnetspule 24 fließende Strom reguliert wird, kann eine steuerbare Bremskraft mittels der Bremseinheit 18a auf das entsprechende Rad des Flurförderzeugs ausgeübt werden.

Weiterhin sei noch auf das in Figur 2a gezeigte Dämpfungselement 34 hingewiesen, welches als Pufferelement aus einem elastischen Material gebildet ist und hinsichtlich seiner Elastizität derart ausgewählt ist, dass ein Einsetzen einer Bremswirkung der Bremseinheit 18a durch ein Dämpfen der Bewegung der Ankerscheibe 30 nach links in Fig. 2a bei einem Einleiten eines Bremsvorgangs nicht in einer abrupten sondern in einer sanften Weise erfolgt, wodurch der Fahrkomfort des entsprechenden Flurförderzeugs deutlich erhöht wird.

Zuletzt sei noch auf Figur 2b verwiesen, in welcher eine alternative Ausführungsform einer entsprechenden Elektromagnet-Bremseinheit gezeigt ist, welche mit dem Bezugszeichen 18a' bezeichnet ist. Diese Bremseinheit 18a' könnte in der Antriebsachsen-Anordnung aus Figur 1 in gleicher Weise wie die erste Ausführungsform 18a eingesetzt werden, sowie in symmetrisch gespiegelter Weise auch anstelle der zweiten Elektromagnet-Bremseinheit 18b.

Hierbei unterscheiden sich die Bremseinheiten 18a und 18a' lediglich durch die Ausgestaltung ihres Dämpfungselements, während die übrigen Komponenten identisch sind, mit entsprechenden Bezugszeichen ergänzt um einen Apostroph versehen sind und dementsprechend auf eine vertiefte Beschreibung davon an dieser Stelle verzichtet sein soll.

Das Dämpfungselement 34' aus Figur 2b umfasst ein Gehäuse 36` mit einer darin gebildeten fluidgefüllten Fluidkammer 38` sowie einen in der Fluidkammer 38' bewegbar aufgenommenen Kolben 40`. Indem durch den geringen Abstand zwischen dem Außenumfang des Kolbens 40' und der Innenwand der Fluidkammer 38` nur eine geringe Menge an Fluid pro Zeiteinheit strömen kann, wird durch das Dämpfungselement 34` ebenfalls ein sanftes Einsetzen einer Bremswirkung in der Bremseinheit 18a' durch eine verlangsamte Bewegung der Ankerscheibe 30' in Richtung der Endscheibe 28' bei einem Einsetzen eines Bremsvorgangs erzielt. Um nach einem Beenden des Bremsvorgangs eine Überführung des Kolbens 40' in seinen Ausgangszustand in Figur 2b ganz rechts zu vereinfachen, ist innerhalb der Fluidkammer 38' ferner eine weitere Feder 42` vorgesehen, welche den Kolben 40' in Richtung nach rechts vorbelastet. Hierbei versteht es sich, dass die Wirkung der Feder 26' in Figur 2b wesentlich größer ist als die Wirkung der Feder 42`, sodass weiterhin in einem unbestromten Zustand der Magnetspule 24' die Bremseinheit 18a' in ihrem Zustand mit maximaler Bremswirkung vorliegt.

## Patentansprüche

1. Antriebsachsen-Anordnung (10) für ein Flurförderzeug, umfassend:
- zwei separate koaxiale Einzelradantriebe (12a, 12b), welche dazu eingerichtet sind, ein jeweiliges rechtes und linkes Rad des Flurförderzeugs mittels eines Antriebsmotors (16a, 16b) anzutreiben;
- wenigstens eine Elektromagnet-Bremseinheit (18a, 18b) pro Einzelradantrieb (12a, 12b), welche dazu eingerichtet ist, während eines Bremsbetriebs eine steuerbare Bremskraft auf das jeweilige Rad des Flurförderzeugs auszuüben; und
- eine Steuervorrichtung (20), welche mit den Elektromagnet-Bremseinheiten (18a, 18b) betriebsmäßig gekoppelt und dazu eingerichtet ist, den Bremsbetrieb der Elektromagnet-Bremseinheiten (18a, 18b) zu steuern.

2. Antriebsachsen-Anordnung (10) nach Anspruch 1,
wobei die Elektromagnet-Bremseinheiten (18a, 18b) dazu eingerichtet sind, in einem unbestromten Zustand eine maximale Bremskraft auszuüben, insbesondere indem die Elektromagnet-Bremseinheiten (18a, 18b) mittels elastischer Elemente (26) in einen Zustand maximaler Bremskraft vorbelastet sind.

3. Antriebsachsen-Anordnung (10) nach einem der vorhergehenden Ansprüche,
wobei jeweils eine einzelne Elektromagnet-Bremseinheit (18a, 18b) pro Einzelradantrieb (12a, 12b) vorgesehen ist, welche an einem dem jeweiligen Rad abgewandten Ende davon angeordnet ist, insbesondere benachbart zu dem entsprechenden Antriebsmotor (16a, 16b).

4. Antriebsachsen-Anordnung (10) nach einem der vorhergehenden Ansprüche,
ferner umfassend wenigstens ein generatorisches Betriebsbremssystem, vorzugsweise ein solches pro Einzelradantrieb (12a, 12b).

5. Antriebsachsen-Anordnung (10) nach Anspruch 4,
wobei die Steuervorrichtung (20) ferner dazu eingerichtet ist, bei einer Bremskraft-Anforderung unterhalb eines Bremskraft-Schwellenwerts lediglich das generatorische Betriebsbremssystem zu betrieben und bei einer Bremskraft-Anforderung oberhalb des Bremskraft-Schwellenwerts sowohl das generatorische Betriebsbremssystem als auch die Elektromagnet-Bremseinheiten (16a, 16b) zu betreiben.

6. Antriebsachsen-Anordnung (10) nach Anspruch 5,
wobei die Steuervorrichtung (20) ferner dazu eingerichtet ist, den Bremskraft-Schwellenwert abhängig von wenigstens einem Betriebsparameter der Antriebsachsen-Anordnung (10) und/oder des Flurförderzeugs anzupassen.

7. Antriebsachsen-Anordnung (10) nach einem der vorhergehenden Ansprüche,
wobei die Steuervorrichtung (20) und die Elektromagnet-Bremseinheiten (18a, 18b) derart eingerichtet sind, dass eine Regelung der durch die Elektromagnet-Bremseinheiten (18a, 18b) ausgeübten Bremskraft in einer kontinuierlichen Weise oder in einer gestuften Weise mit wenigstens drei Bremskraftstufen erfolgt.

8. Antriebsachen-Anordnung (10) nach einem der vorhergehenden Ansprüche,
wobei die Steuervorrichtung (20) ferner dazu eingerichtet ist, einen Stromverbrauch der Elektromagnet-Bremseinheiten (18a, 18b) während ihres Betriebs zu überwachen und ggf. auf Grundlage dieser Überwachung eine Anpassung der Steuerung des Bremsbetriebs der Elektromagnet-Bremseinheiten (18a, 18b) vorzunehmen.

9. Antriebsachsen-Anordnung (10) nach einem der vorhergehenden Ansprüche,
wobei die Elektromagnet-Bremseinheiten (18a, 18b, 18a`) jeweils eine Endscheibe (28, 28`), eine durch einen Elektromagneten (24, 24`) verlagerbare und mittels eines elastischen Elements (26, 26`) in Richtung der Endscheibe (28, 28`) vorbelastete Ankerscheibe (30, 30`) sowie einen zwischen der Endscheibe (28, 28`) und der Ankerscheibe (30, 30`) angeordneten Bremsrotor (32, 32`) umfassen, wobei ferner zwischen der Endscheibe (28, 28`) und der Ankerscheibe (30, 30`) wenigstens ein Dämpfungselement (34, 34`) angeordnet ist.

10. Antriebsachsen-Anordnung (10) nach Anspruch 9,
wobei eine Mehrzahl von Dämpfungselementen (34, 34`) umfänglich beabstandet radial außerhalb des Bremsrotors (32, 32`) angeordnet sind.

11. Antriebsachsen-Anordnung (10) nach Anspruch 9,
wobei ein einzelnes Dämpfungselement (34, 34`) vorgesehen ist, welches sich radial außerhalb des Bremsrotors (32, 32`) im Wesentlichen um den gesamten Umfang davon erstreckt.

12. Antriebsachsen-Anordnung (10) nach einem der Ansprüche 9 bis 11, wobei das wenigstens eine Dämpfungselement (34`) ein Gehäuse (36`) mit einer darin gebildeten fluidgefüllten Fluidkammer (38`) sowie einen in der Fluidkammer (38`) bewegbar aufgenommenen Kolben (40`) umfasst, wobei vorzugsweise der Kolben (40`) mittels eines elastischen Elements (42`), beispielsweise einer Feder, in eine Endstellung vorbelastet ist, welche einer offenen Position der entsprechenden Elektromagnet-Bremseinheit (18a`) entspricht.

13. Antriebsachsen-Anordnung (10) nach einem der Ansprüche 9 bis 11, wobei das wenigstens eine Dämpfungselement (34) durch ein Pufferelement aus einem elastischen Material gebildet ist.

14. Flurförderzeug, umfassend eine Antriebsachsen-Anordnung (10) nach einem der vorhergehenden Ansprüche.

15. Flurförderzeug nach Anspruch 14,
ferner umfassend ein Fahrpedal, ein Bremspedal und eine zentrale Steuereinheit, wobei die zentrale Steuereinheit mit der Steuervorrichtung (20) der Antriebsachsen-Anordnung (10) betriebsmäßig gekoppelt oder integriert und dazu eingerichtet ist, auf Grundlage einer Betätigung des Fahrpedals wenigstens einen Antriebsmotor des Flurförderzeugs sowie wenigstens ein generatorisches Betriebsbremssystem des Flurförderzeugs zu betreiben und auf Grundlage einer Betätigung des Bremspedals die Elektromagnet-Bremseinheiten (18a, 18b) der Antriebsachsen-Anordnung (10) zu betreiben.
